# EUROPEAN PATENT SPECIFICATION

(11) **EP 0 461 624 B1**
(45) Date of publication and mention of the grant of the patent: **20.09.1995**
(21) Application number: 91109603.0
(22) Date of filing: 12.06.1991
(51) Int. Cl.: G02C 7/02

(54) **Spectacle lens**
Brillenlinse
Lentille ophtalmique

(30) Priority: 13.06.1990 JP 154371/90; 22.08.1990 JP 220592/90; 28.11.1990 JP 326440/90
(43) Date of publication of application: 18.12.1991
(73) Proprietor: SEIKO EPSON CORPORATION, Shinjuku-ku Tokyo-to (JP)
(72) Inventor: Kato, Kazutoshi, c/o Seiko Epson Corporation, Suwa-shi, Nagano-ken (JP); Katada, Toshiharu, c/o Seiko Epson Corporation, Suwa-shi, Nagano-ken (JP); Yokoyama, Osamu, c/o Seiko Epson Corporation, Suwa-shi, Nagano-ken (JP)
(74) Representative: Hoffmann, Eckart, Dipl.-Ing.

(56) References cited:
- EP-A- 0 291 094
- EP-A- 0 371 460
- DE-A- 3 116 524
- FR-A- 2 533 708
- FR-A- 2 584 823
- GB-A- 1 536 891
- US-A- 3 687 528

## Description

The present invention relates to a corrective spectacle lens for hyperopia, myopia, astigmatism, etc.

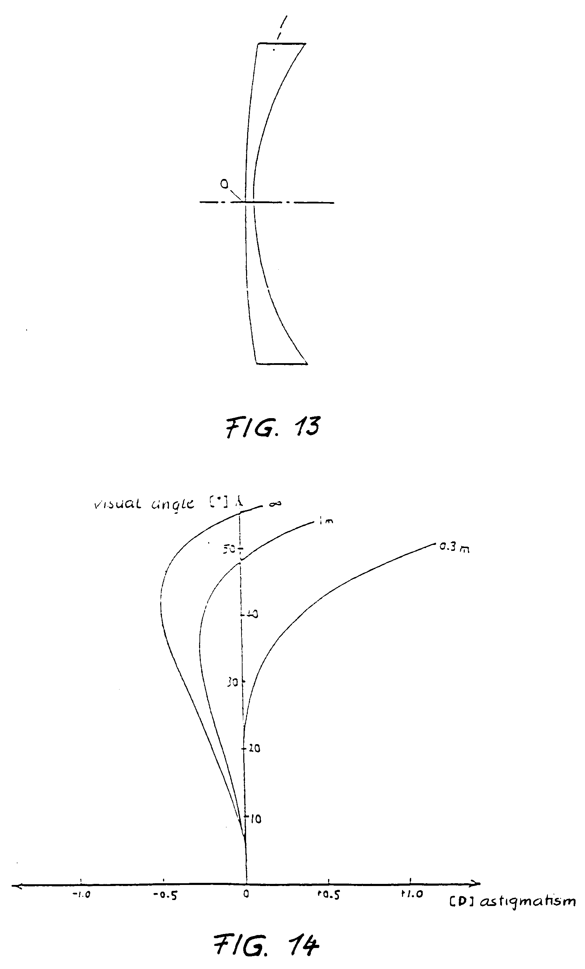

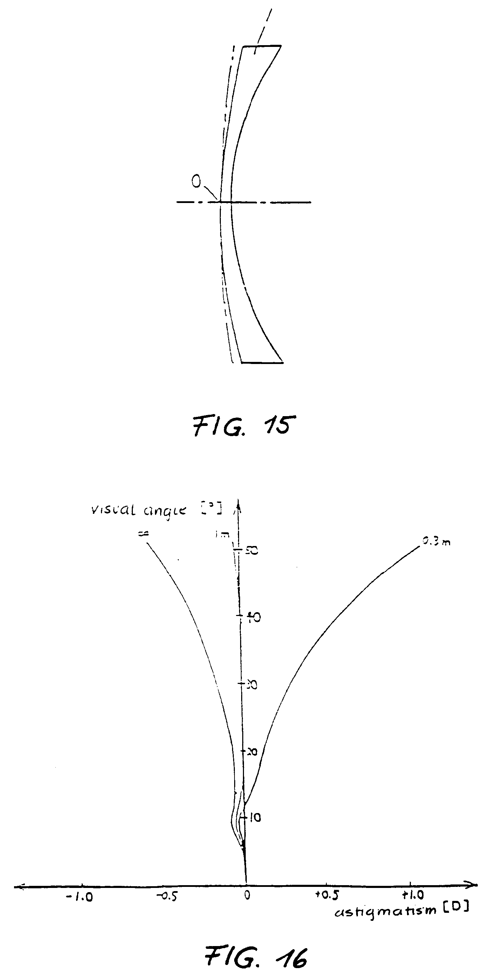

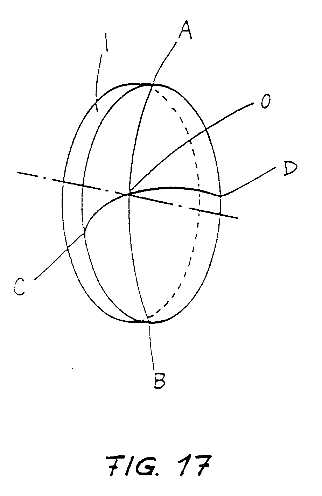

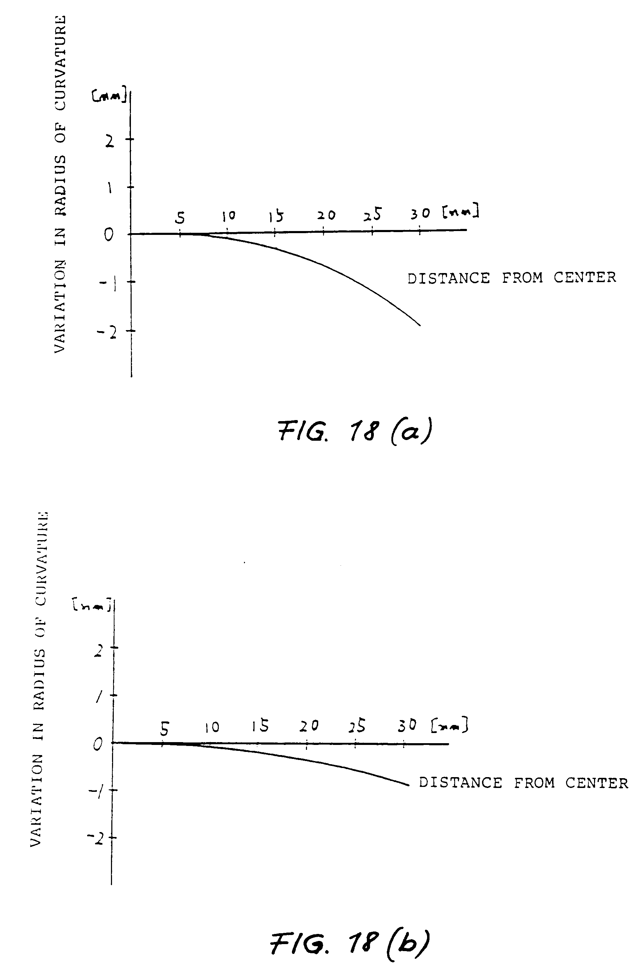

Fig. 13 shows a typical corrective spectacle lens of a conventional type. The front refracting surface of this lens is spherical, whereas the backward refracting surface thereof is formed as a spherical or a non-spherical surface called a toric surface which is adapted to the prescription of the wearer of the spectacles. Lenses have an optical defect called aberrations, and to reduce them to a minimum is the business of the lens maker. For a conventional lens with a spherical front refracting surface, the aberrations have conventionally been reduced as shown in Fig. 14 by appropriately selecting the value of the radius of curvature of the spherical surface. In a lens of this type, however, the radius of curvature of the front refracting surface thereof is likely to be relatively small, with the result that, when used as a spectacle lens, its forward protrusion is rather conspicuous, which means it is not desirable in terms of outward appearance. This also constitutes a serious obstacle to reduction in thickness and weight.

With a view to solving the above problem, a lens has been developed (EP-A-0 371 460) whose front refracting surface is formed as a non-spherical surface that is symmetric with respect to a rotation axis, as shown in Fig. 15 (in Fig. 15 the dotted line corresponds to a spherical surface). With this lens, which has already appeared on the market, the forward protrusion has been reduced while retaining the aberrations at the lowest possible level, thus achieving a substantial improvement in terms of thickness and weight as well as of outward appearance. In this type of lens, the aberrations are mitigated by forming the forward refracting surface as a non-spherical surface. However, if the aberrations have been mitigated, it is only with respect to an object positioned at a fixed distance. No substantial improvement has been attained in terms of the aberrations with respect to objects at all other distances, from the closest vicinity to a long distance. For example, as shown in Fig. 16, the lens can provide a clear visual field with little astigmatism with respect to an object at a position lm away therefrom, whereas, with respect to an object at a distance other than that, e.g., at a distance of 30cm to infinity, the elimination of astigmatism from the visual field it provides cannot be said to be complete.

The present invention aims to eliminate the above problem in non-spherical lenses of this type. It is the object of this invention to provide a thin and light lens in which the aberrations have been mitigated for all distances, including the closest vicinity to a great distance.

This object is achieved with a spectacle lens as claimed.

Specific embodiments of the invention are defined in the dependent claims.

Further, in the case where a lens material having a refracting index of 1.55 or more is used, the spectacle lens of this invention helps to attain a further improvement in terms of reduction in thickness and weight.

Researches made by the present inventor have revealed the fact that the degree of non-sphericalness for compensating for aberrations must be higher with respect to an object at a long distance than with respect to a nearby object. That is, the variation in curvature from the lens center to the outer periphery thereof is larger when compensating for aberrations with respect to an object at a long distance than when compensating for aberrations with respect to a nearby object.

Further, it is to be noted that a lens having a refracting surface with a high degree of non-sphericalness generally exhibits a large variation in degree of curvature from the lens center to the outer periphery.

Accordingly, when, as in this invention, a non-spherical surface portion exhibiting a relatively large variation in degree of curvature is arranged in the upper section of the lens, and a non-spherical surface portion exhibiting a relatively small variation in degree of curvature is arranged in the lower section of the lens, the aberrations with respect to an object at a relatively long distance are compensated for by the upper section of the lens, and those with respect to an object at a relatively short distance are compensated for by the lower section of the lens. Therefore, in accordance with this invention, a spectacle lens which little involves aberrations over the entire visual field can be provided.

Further, when a minus refracting power is imparted to that side of the lens which has a relatively small refracting power, that side of the lens which has a relatively large refracting power is made non-spherical. Due to this arrangement, the lens thickness in the peripheral region is reduced in a lens with a minus prescription, and, in a lens with a plus prescription, the central section thickness thereof can be diminished so as to reduce its forward protrusion. Furthermore, in a spectacle lens thus provided, aberrations are reduced to a minimum.

Preferred embodiments of this invention will now be described with reference to the accompanying drawings, in which:
- Fig. 1: is a front view of a lens in accordance with a first embodiment of this invention;
- Fig. 2: is a chart showing the variation in curvature of the front refracting surface of this lens;
- Figs. 3(a) and 3(b): are astigmatism charts of this lens;
- Fig. 4: is a front view of a lens in accordance with a second embodiment of this invention;
- Fig. 5: is a chart showing the variation in curvature of the front refracting surface of this lens;
- Figs. 6(a) and 6(b): are astigmatism charts of this lens;
- Fig. 7: is a front view of a lens in accordance with a third embodiment of this invention;
- Fig. 8: is a chart showing the variation in curvature of the front refracting surface of this lens;
- Figs. 9(a) and 9(b): are astigmatism charts of this lens;
- Figs. 10(a) and 10(b): are a front view and a sectional view of a lens in accordance with a fourth embodiment of this invention;
- Fig. 11: is a chart showing the variation in curvature of the front refracting surface of this lens;
- Figs. 12(a) and 12(b): are astigmatism charts of this lens;
- Fig. 13: is a sectional view of a conventional spherical lens;
- Fig. 14: is an astigmatism chart of the conventional spherical lens;
- Fig. 15: is a sectional view of a conventional non-spherical lens;
- Fig. 16: is an astigmatism chart of the conventional non-spherical lens;
- Fig. 17: is a schematic view of a non-spherical corrective lens for astigmatism in accordance with this invention;
- Figs. 18(a) and 18(b): are charts showing variations in radius of curvature in a fifth embodiment of this invention;
- Figs. 19(a) and 19(b): are charts showing variations in astigmatism in the fifth embodiment;
- Figs. 20(a) and 20(b): are charts showing variations in radius of curvature in a sixth embodiment of this invention;
- Figs. 21(a) and 21(b): are charts showing variations in astigmatism in the sixth embodiment;
- Fig. 22: is a sectional view of a concave lens in accordance with an seventh embodiment of this invention;
- Fig. 23: is a sectional view of a convex lens in accordance with an eighth embodiment of this invention; and
- Fig. 24: shows an application of the present invention to a pair of spectacles.

### Embodiment 1

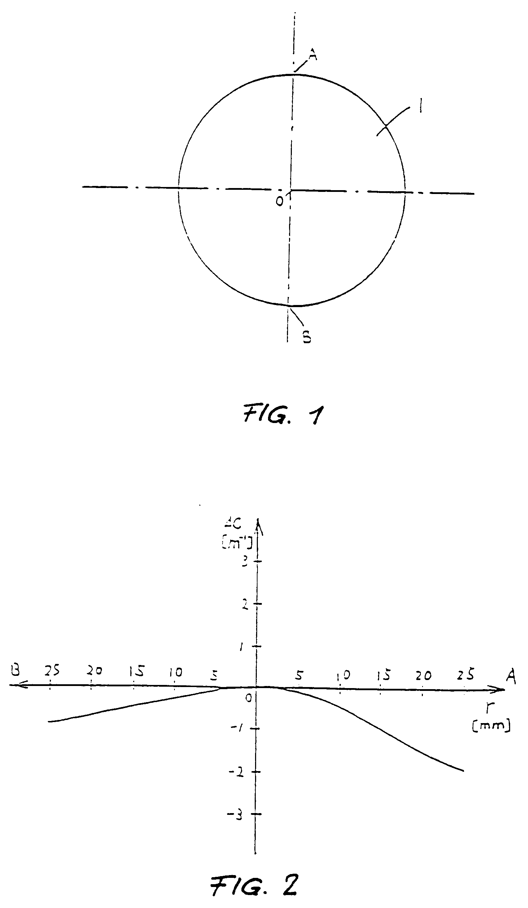

Fig. 1 is a front view of a spectacle lens 1 of +3.00D in accordance with a first embodiment of this invention. The reference symbol 0 indicates the optical center of the lens 1. This optical center is coincided with the center of pupil when the lens is fitted into a spectacle frame. Lines 0A and 0B extending vertically upwards and downwards, respectively, from the center 0 constitute the representative meridian of the lens 1. The feature of this invention is to be described in terms of these lines. The variation in curvature in the region from the center 0 to the outer periphery is a maximum along the line 0A and a minimum along the line 0B. The variations in curvature along the other meridians of the lens 1 are somewhere between the variation curvature along the line 0A and that along the line 0B.

Fig. 2 is a graph showing the variation in curvature along the line 0A and that along the line OB. The abscissa shows the distance r from the center 0 along 0A and 0B, respectively, and the ordinate shows the difference ΔC between the curvature in the center and the respective point on 0A and OB, respectively. Table 1 shows curvatures in this embodiment.

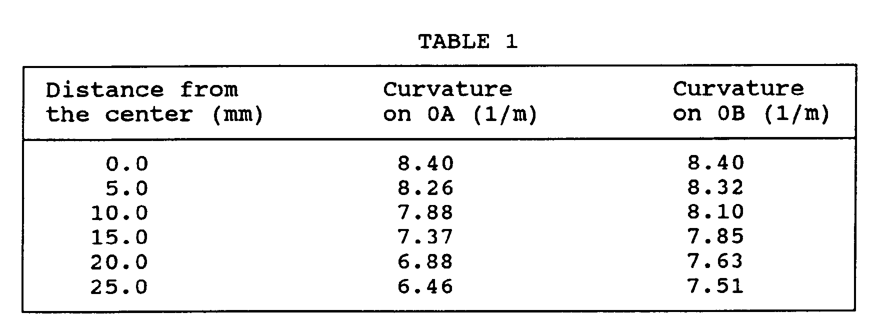

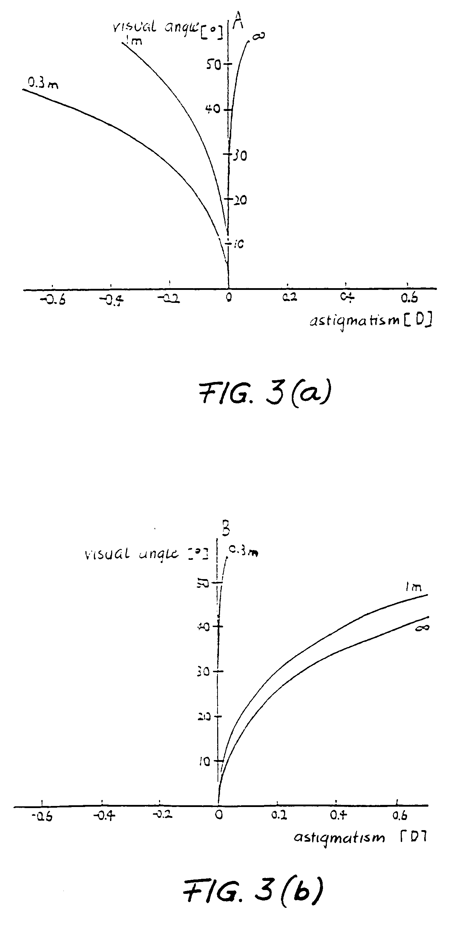

Fig. 3(a) shows the astigmatism when an object at infinity, 1 m and 0.3 m is observed through 0A. Fig. 3(b) shows the astigmatism when an object at a distance of 30 cm, 1 m and infinity is observed through OB.

### Embodiment 2

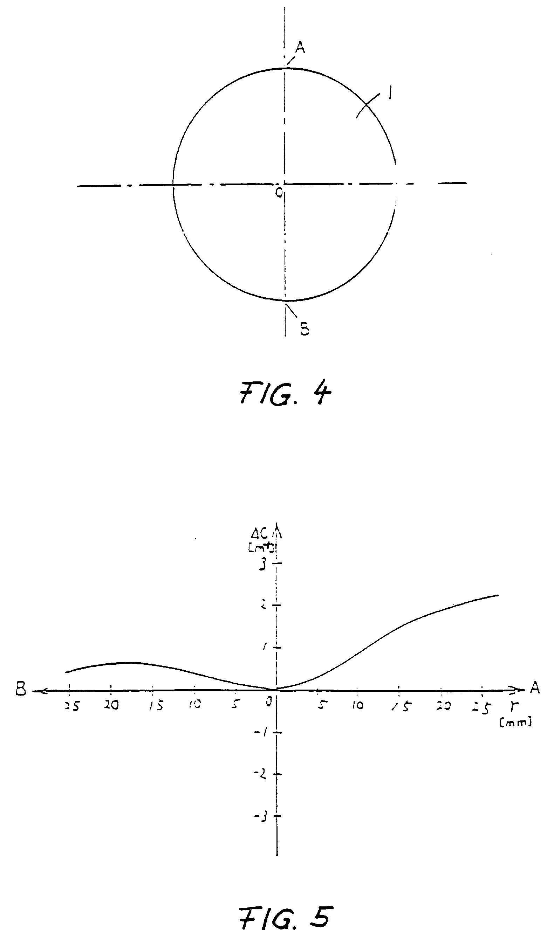

Fig. 4 is a front view of a spectacle lens of -6.00D in accordance with a second embodiment of this invention. The reference symbols 0, A and B indicate the same things as those in the above embodiment.

Fig. 5 shows the variations along the lines 0A and 0B of the front refracting surface. The abscissa shows the distance r from the center 0 along 0A and 0B, respectively, and the ordinate shows the difference ΔC between the curvature in the center and the respective point on 0A and 0B, respectively. The variations are in the direction reverse to that of the first embodiment. This, however, does not affect the feature of this invention that the variation in curvature along n the line 0A is larger than that along the line 0B. Table 2 shows curvatures in this embodiment.

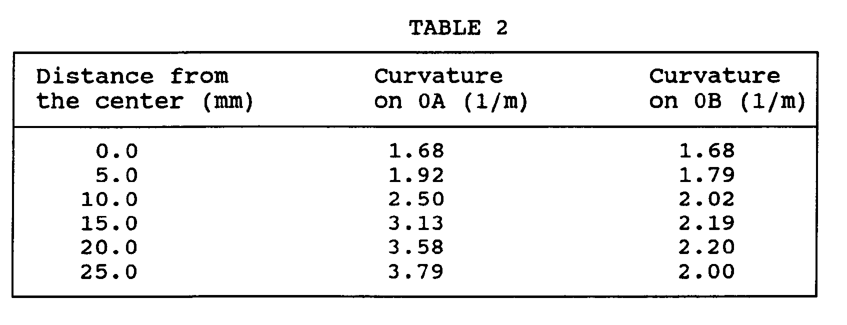

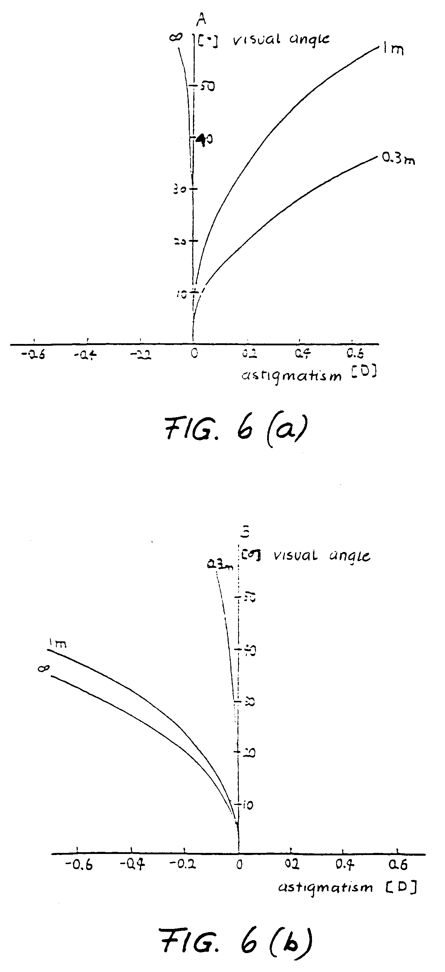

Fig. 6(a) shows the astigmatism when an object at infinity, 1 m and 0.3 m is observed through 0A. Fig. 6(b) shows the astigmatism when an object at a distance of 30 cm, 1 m and infinity is observed through 0B.

### Embodiment 3

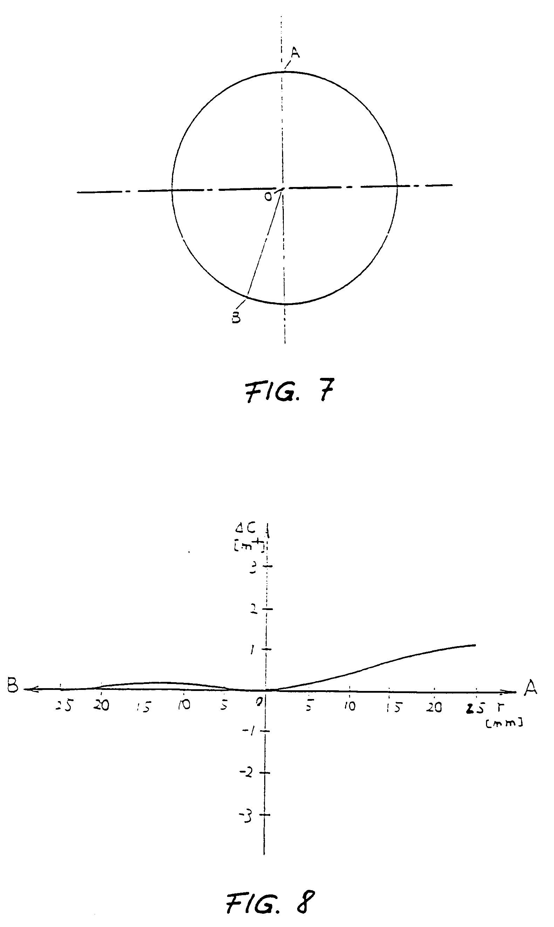

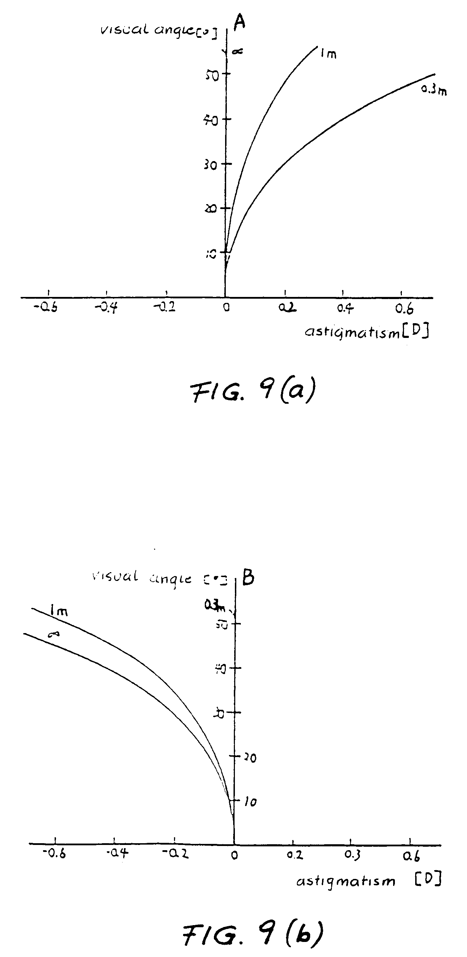

Fig. 7 is a front view of a spectacle lens of -3.00D in accordance with a third embodiment of this invention. The reference symbols used therein are the same as those in the above embodiment. Note, however, that in this case 0B is different from the first and second embodiments.

Fig. 8 shows the variations in curvature along the lines 0A and 0B of the front refracting surface. The abscissa shows the distance r from the center 0 along 0A and 0B, respectively, and the ordinate shows the difference ΔC between the curvature in the center and the respective point on 0A and 0B, respectively. Table 3 shows curvatures in this embodiment.

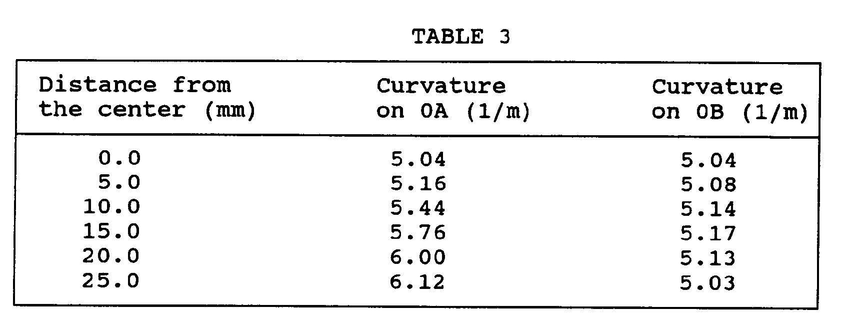

Fig. 9(a) shows the astigmatism when an object at infinity, 1 m and 0.3 m is observed through 0A. fig. 9(b) shows the astigmatism when an object at a distance of 30cm, 1 m and infinity is observed through 0B.

### Embodiment 4

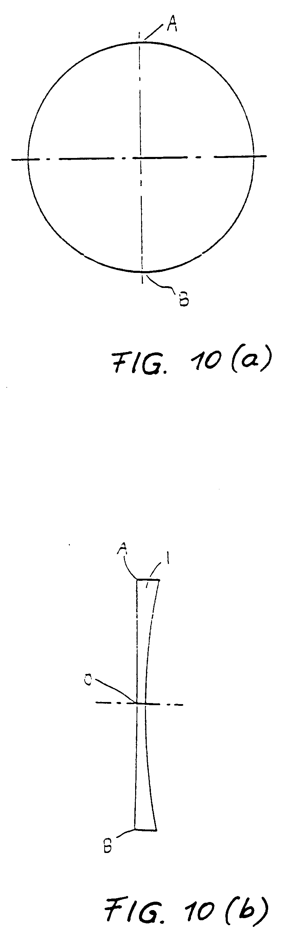

Fig. 10(a) is a front view of a spectacle lens in accordance with a fourth embodiment of this invention. This embodiment consists of a lens of -6.00D whose two refracting surface are both concave. The reference symbols used in the drawing are the same as those in the above embodiments. Fig. 10(b) is a sectional view of the lens taken along the line A0B.

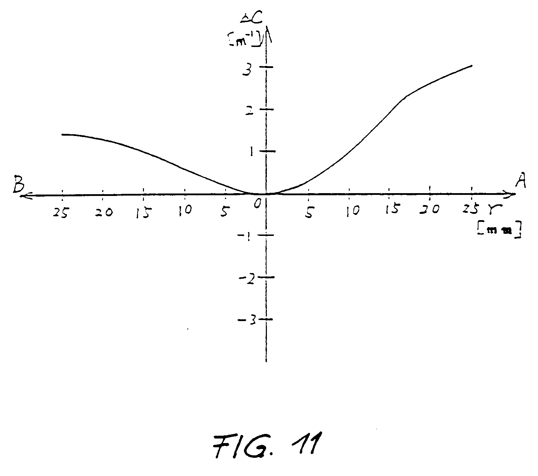

Fig. 11 shows the variations in curvature along the lines 0A and 0B of the front refracting surface. The abscissa shows the distance r from the center 0 along 0A and 0B, respectively, and the ordinate shows the difference ΔC between the curvature in the center and the respective point on 0A and 0B, respectively. Table 4 shows curvatures in this embodiment.

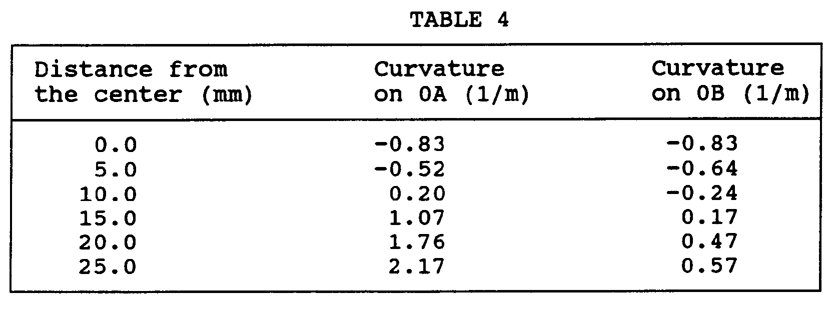

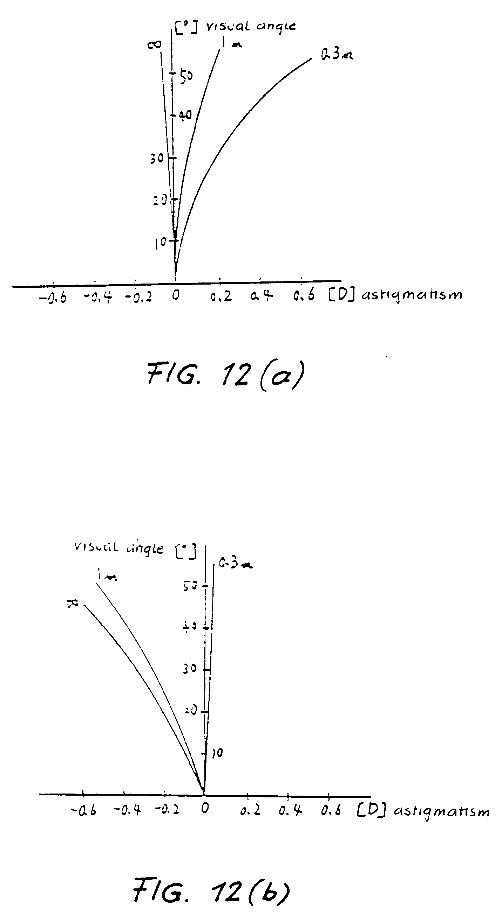

Fig. 12(a) shows the astigmatism when an object at infinity, 1 m and 0.3 m is observed through 0A. Fig. 12(b) shows the astigmatism when an object at a distance of 30 cm, 1 m and infinity is observed through 0B.

### Embodiment 5

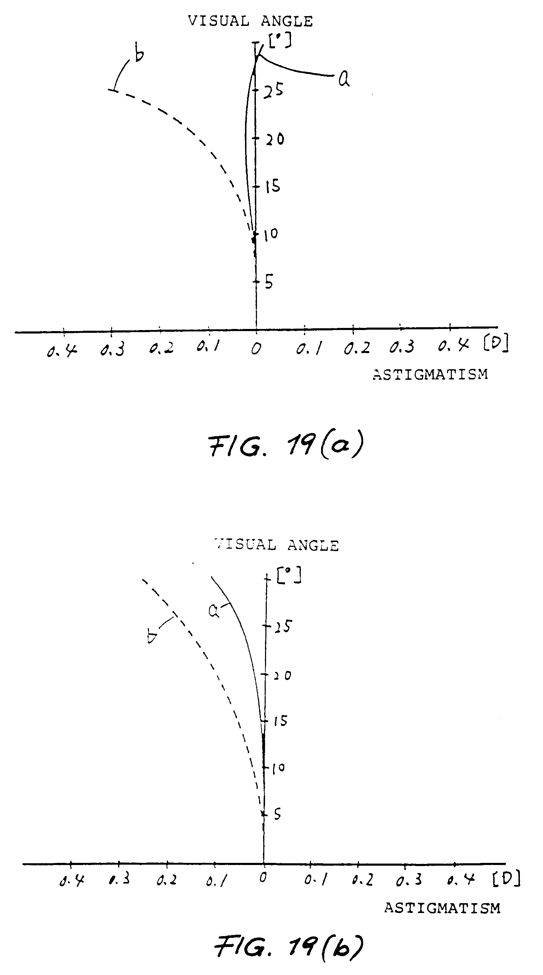

Fig. 17 is a schematic view of a non-spherical corrective lens for astigmatism constituting the fifth embodiment of this invention. The lens of this embodiment has a degree of sphericalness S of +2.00D (diopter), a degree of astigmatism C of +1.00D, a lens diameter of 75 mm, and a central section thickness of 4.0 mm, and is formed of a material whose refractive index n = 1.5. The front refracting surface of this lens consists of a spherical surface having a surface refracting power of 5.0D, i.e., a radius of curvature of 100 mm. The rear refracting surface consists of an aspherical surface whose radius of curvature at the point 0 corresponding to the optical center of the lens is 241.83 mm on the meridian AOB and 163.00 mm on the meridian COD. The radii of curvature on these meridians vary from the point 0 to the outer periphery of the lens. Fig. 18(a) shows the variation in radius of curvature on 0A, and Fig. 18(b) shows the variation in radius of curvature on 0B. Fig. 19(a) is a graph showing the increase in astigmatism along the line 0A (line a), and Fig. 19(b) is a graph showing the increase in astigmatism along the line OC (line a). The broken lines b in the two graphs represent the increase in astigmatism in conventional toric-surface corrective lenses for astigmatism adapted to the same prescriptions.

### Embodiment 6

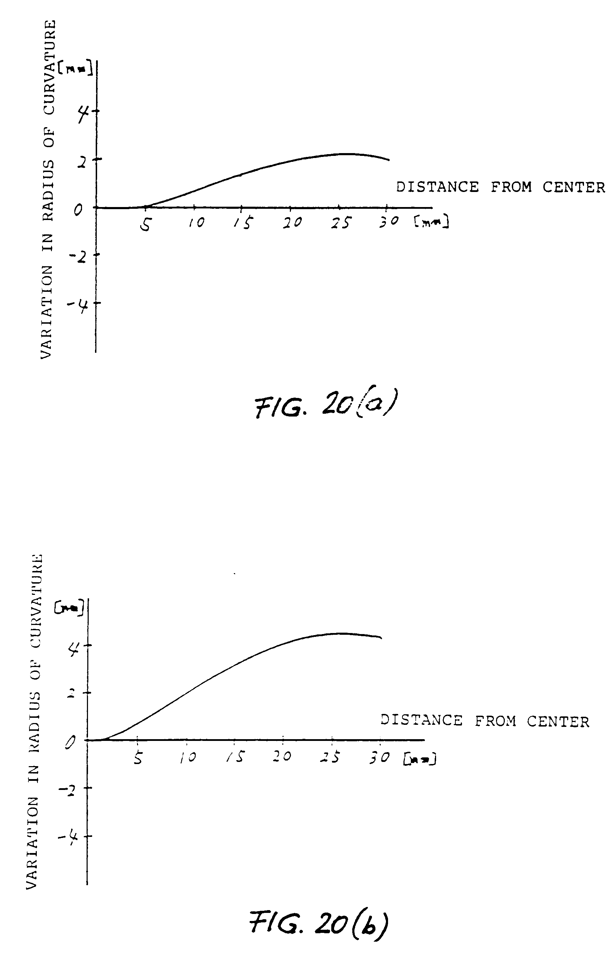

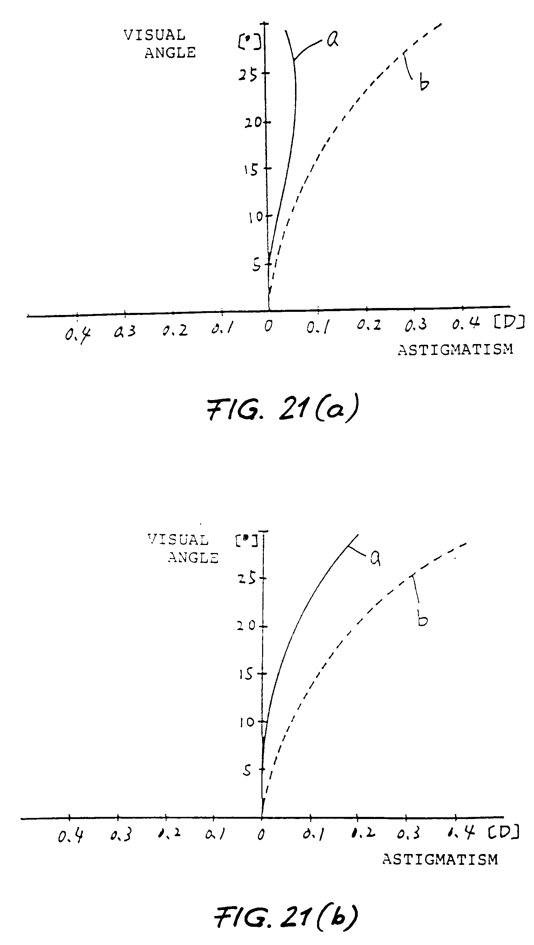

The lens of this embodiment has a degree of sphericalness S of -6.00D (diopter), a degree of astigmatism C of -2.00D, a lens diameter of 75 mm, and a central section thickness of 1.0 mm, and is formed of a material whose refractive index n = 1.6. The front refracting surface of this lens consists of a spherical surface having a surface refracting power of 1.0D, i.e., a radius of curvature of 600 mm. The rear refracting surface consists of an aspherical surface whose radius of curvature at the point 0 corresponding to the optical center of the lens is 85.71 mm on the meridian A0B and 66.66 mm on the meridian COD. The radii of curvature on these meridians vary from the point 0 to the outer periphery of the lens. Fig. 20(a) shows the variation in radius of curvature along 0A, and Fig. 20(b) shows the variation in radius of curvature along 0B. Fig. 21(a) is a graph showing the increase in astigmatism along 0A, and Fig. 21(b) is a graph showing the increase in astigmatism along 0C. The broken lines b in the two graphs represent the increase in astigmatism in conventional toric-surface corrective lenses for astigmatism adapted to the same prescriptions.

### Embodiment 7

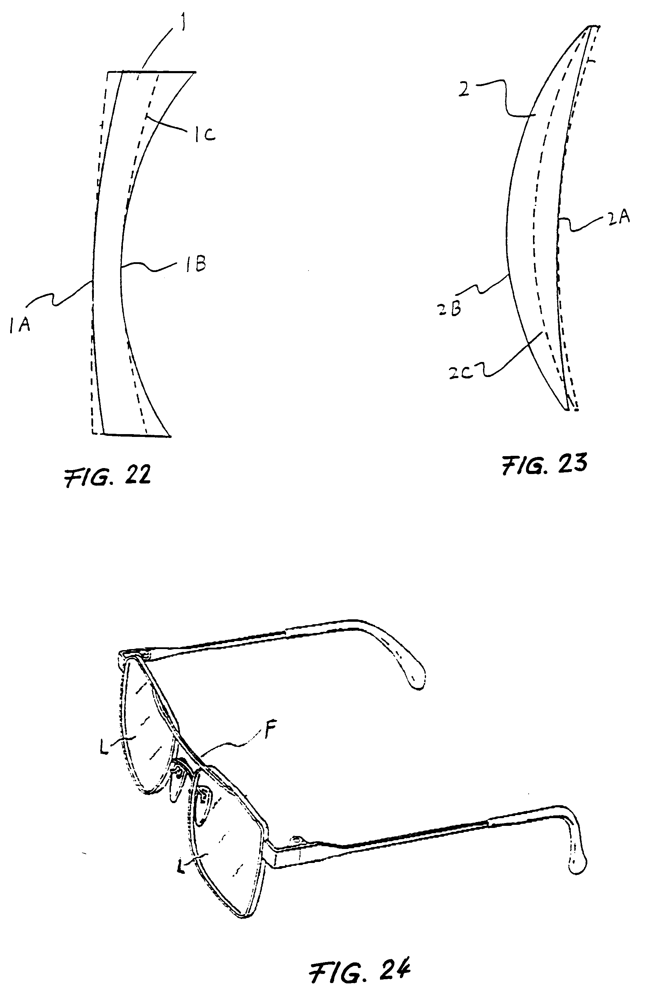

Fig. 22 is a sectional view of a minus lens to which the present invention is applied. The region from the center to the outer periphery of the front refracting surface 1A of this lens is formed as a non-spherical surface which is endowed with a minus refracting power, and the rear refracting surface thereof is formed as a non-spherical surface adapted to compensate for deterioration in the optical performance of the lens. In the upper section of the lens, astigmatism is compensated for with respect to a long distance (1000 m), and, in the lower section of the lens, it is compensated for with respect to a short distance (0.3 m). The astigmatism compensation with respect to the long distance is effected to a higher degree as compared to that with respect to the short distance, so that the rise in the rear surface is larger in the upper section of the lens, with the edge thickness in the outer peripheral section being smaller in the upper section than in the lower section of the lens.

### Embodiment 8

Fig. 23 shows a plus lens to which the present invention is applied. A minus refracting power is imparted to the region from the center to the outer periphery of the rear refracting surface 2A of the lens. Astigmatism is compensated for with respect to a long distance (1000 m) by that section of the front refracting surface 2C which is in the upper section of the lens. In the lower section of the lens, astigmatism is compensated for with respect to a short distance (0.3 m). As in the above case, the astigmatism compensation with respect to a long distance is effected to a higher degree than that with respect to a short distance. Accordingly, the upper section of the lens is made flatter than the lower section of the same.

As described with reference to the above embodiments, there is provided, in accordance with this invention, a spectacle lens which exhibits different non-spherical surfaces in the upper and lower sections thereof. With this lens, astigmatism is compensated for with respect to both long and short distances. This arrangement makes it possible to improve the optical properties of a conventional non-spherical lens without impairing its merit of being thin and light.

In the case of a corrective lens for astigmatism, an improvement in terms of optical properties can be effectively attained with respect to two different degrees.

Further, through an appropriate combination of technical ideas according to this invention, the thickness and weight of a spectacle lens can be substantially reduced, and the optical performance of the lens can be improved as compared to that of conventional lenses.

The present invention is particularly effective when it is applied to a lens which is formed of a material having a high refractive index of 1.55 or more.

Fig. 24 shows an application of the present invention with a pair of spectacles comprising a frame F and two lenses L in accordance with the above description.

## Claims

1. A monofocal, bifocal, or trifocal spectacle lens comprising front and rear refracting surfaces, wherein at least one of said refracting surfaces exhibits, in the region from approximately the center to the outer periphery of the lens, a variation in curvature,
characterized in that the variation in curvature is larger in the upper section of the lens than in the lower section thereof.

2. A spectacle lens according to claim 1, comprising: a front refracting surface exhibiting, in the region from approximately the center to the outer periphery of the lens, a variation in curvature which is larger in the upper section of the lens than in the lower section thereof; and a rear refracting surface having a radius of curvature which varies from the optical center of the lens to the outer periphery thereof.

3. A spectacle lens according to claim 1, wherein the rear refracting surface has a radius of curvature which varies from the optical center of the lens to the outer periphery thereof and exhibits, in the region or approximately the center to the outer periphery of the lens, a variation in curvature which is larger in the upper section of the lens than in the lower section thereof.

4. A spectacle lens according to claim 1 with a minus prescription, comprising: a front refracting surface the refracting power of which decreases radially from the center to the periphery thereof; and a rear refracting surface formed as a refracting surface which exhibits, in the region from approximately the center to the outer periphery of the lens, a variation in curvature which is larger in the upper section of the lens than in the lower section thereof, or as a refracting surface which has a radius of curvature that varies from the optical center of the lens to the outer periphery thereof.

5. A spectacle lens according to claim 1 with a plus prescription, comprising: a front refracting surface which exhibits, in the region from approximately the center to the outer periphery of the lens, a variation in curvature which is larger in the upper section of the lens than in the lower section thereof; and a rear refracting surface which is formed as a refracting surface having a radius of curvature that varies from the optical center of the lens to the outer periphery thereof, or as a surface the refracting power of which decreases radially from the center to the periphery thereof.

6. A spectacle lens as claimed in one of claims 1 to 5, wherein the refractive index of said lens is not less than 1.55.

7. A pair of spectacles comprising a frame into which lenses as claimed in one of claims 1 to 6 are fitted.

## Patentansprüche

1. Monofokale, bifokale oder trifokale Brillenlinse, umfassend eine vordere und eine hintere brechende Oberfläche, wobei wenigstens eine der brechenden Oberflächen in dem Bereich von annähernd der Mitte bis zum äußeren Rand der Linse eine Änderung der Krümmung aufweist, dadurch gekennzeichnet, daß die Änderung der Krümmung im oberen Abschnitt der Linse größer ist als in ihrem unteren Abschnitt.

2. Brillenlinse nach Anspruch 1, umfassend:
eine vordere brechende Oberfläche, die in dem Bereich von annähernd der Mitte bis zum äußeren Rand der Linse eine Änderung der Krümmung aufweist, die im oberen Abschnitt der Linse größer ist als in ihrem unteren Abschnitt; und
eine hintere brechende Oberfläche, die einen Krümmungsradius aufweist, der sich von der optischen Mitte der Linse zu ihrem äußeren Rand ändert.

3. Brillenlinse nach Anspruch 1, bei der die hintere brechende Oberfläche einen Krümmungsradius aufweist, der sich von der optischen Mitte der Linse zu ihrem äußeren Rand ändert und in dem Bereich von annähernd der Mitte bis zum äußeren Rand der Linse eine Änderung der Krümmung aufweist, die im oberen Abschnitt der Linse größer ist als in ihrem unteren Abschnitt.

4. Brillenlinse nach Anspruch 1, mit einer Minus-Anweisung, umfassend:
eine vordere brechende Oberfläche, deren Brechkraft radial von der Mitte zu ihrem Rand abnimmt; und
eine hintere brechende Oberfläche, die als eine brechende Oberfläche ausgebildet ist, welche in dem Bereich von annähernd der Mitte bis zu dem äußeren Rand der Linse eine Änderung der Krümmung aufweist, die in dem oberen Abschnitt der Linse größer ist als in ihrem unteren Abschnitt, oder als eine brechende Oberfläche, die einen Krümmungsradius aufweist, der sich von der optischen Mitte der Linse zu ihrem äußeren Rand ändert.

5. Brillenlinse nach Anspruch 1, mit einer Plusverordnung, umfassend:
eine vordere brechende Oberfläche, die in dem Bereich von annähernd der Mitte bis zu dem äußeren Rand der Linse eine Änderung der Krümmung aufweist, die in dem oberen Abschnitt der Linse größer ist als in ihrem unteren Abschnitt; und
eine hintere brechende Oberfläche, die als eine brechende Oberfläche ausgebildet ist, welche einen Krümmungsradius aufweist, der sich von der optischen Mitte der Linse zu ihrem äußeren Rand ändert, oder als eine Oberfläche, deren Brechkraft radial von der Mitte zu ihrem Rand abnimmt.

6. Brillenlinse nach einem der Ansprüche 1 bis 5, bei der der Brechungsindex der Linse nicht weniger als 1,55 beträgt.

7. Brille, umfassend einen Rahmen, in den Linsen nach einem der Ansprüche 1 bis 6 eingesetzt sind.

## Revendications

1. Lentille de lunette monofocale, bifocale ou trifocale comprenant des surfaces réfractantes avant et arrière, dans lesquelles au moins l'une des surfaces réfractantes présente, dans la région allant approximativement du centre à la périphérie extérieure de la lentille, une variation de courbure,
caractérisée en ce que la variation de courbure est plus importante dans la section supérieure de la lentille que dans sa section inférieure.

2. Lentille de lunette selon la revendication 1, comprenant : une surface réfractante avant présentant, dans la région allant approximativement du centre à la périphérie extérieure de la lentille, une variation de courbure qui est plus élevée dans la partie supérieure de la lentille que dans sa partie inférieure; et une surface réfractante arrière ayant un rayon de courbure qui varie du centre optique de la lentille à sa périphérie extérieure.

3. Lentille de lunette selon la revendication 1, dans laquelle la surface réfractante arrière a un rayon de courbure qui varie du centre optique de la lentille à sa périphérie extérieure et présente, dans la région allant approximativement du centre à la périphérie extérieure de la lentille, une variation de courbure qui est plus élevée dans la partie supérieure de la lentille que dans sa partie inférieure.

4. Lentille de lunettes selon la revendication 1, pour une prescription négative comprenant : une surface réfractante avant dont la puissance réfractante décroît radialement de son centre à sa périphérie; et une surface réfractante arrière réalisée sous la forme d'une surface réfractante qui présente, dans la région allant approximativement du centre à la périphérie extérieure de la lentille, une variation de courbure qui est plus élevée dans la partie supérieure de la lentille que dans sa partie inférieure, ou sous la forme d'une surface réfractante qui a un rayon de courbure variant du centre optique de la lentille à sa périphérie extérieure.

5. Lentille de lunettes selon la revendication 1, pour une prescription positive comprenant : une surface réfractante avant qui présente, dans la région allant approximativement du centre à la périphérie extérieure de la lentille, une variation de courbure qui est plus élevée dans la partie supérieure de la lentille que dans sa partie inférieure; et une surface réfractante arrière qui est réalisée sous la forme d'une surface réfractante ayant un rayon de courbure qui varie du centre optique de la lentille à sa périphérie extérieure, ou sous la forme d'une surface dont la puissance réfractante décroît radialement de son centre à sa périphérie.

6. Lentille de lunette de l'une des revendications 1 à 5, dans laquelle l'indice de réfraction de la lentille n'est par inférieur à 1,55.

7. Une paire de lunettes comprenant une monture dans laquelle sont montés des lentilles telles que revendiquées dans l'une des revendications 1 à 6.
